Europäisches Patentamt

European Patent Office

Office européen des brevets

(11) Numéro de publication: **0 350 373 B1**

(12) **FASCICULE DE BREVET EUROPEEN**

(45) Date de publication du fascicule du brevet: **15.11.95** (51) Int. Cl.⁶: **B01D 53/047**

(21) Numéro de dépôt: **89401854.8**

(22) Date de dépôt: **28.06.89**

(54) **Procédé de traitement d'un mélange gazeux par adsorption.**

(30) Priorité: **08.07.88 FR 8809312**

(43) Date de publication de la demande:
**10.01.90 Bulletin 90/02**

(45) Mention de la délivrance du brevet:
**15.11.95 Bulletin 95/46**

(84) Etats contractants désignés:
**AT BE CH DE ES FR GB GR IT LI LU NL SE**

(56) Documents cités:
**EP-A- 0 215 899**
**EP-A- 0 248 922**
**GB-A- 2 155 805**

**Tondeur, D; Wankat, C.,: Separation and Purification Methods, 14(2), (1985), pp. 157, 194, 195, 200-203**

(73) Titulaire: **L'AIR LIOUIDE, SOCIETE ANONYME POUR L'ETUDE ET L'EXPLOITATION DES PROCEDES GEORGES CLAUDE**
**75, Ouai d'Orsay**
**F-75321 Paris Cédex 07 (FR)**

(72) Inventeur: **Hay, Léon**
**19, rue de la Vistule**
**F-75013 Paris (FR)**

(74) Mandataire: **Le Moenner, Gabriel et al**
**L'AIR LIOUIDE**
**75, Ouai d'Orsay**
**F-75321 Paris Cédex 07 (FR)**

## Description

La présente invention est relative à un procédé de traitement d'un mélange gazeux par adsorption à variation de pression (PSA), du type mettant en oeuvre trois adsorbeurs avec, pour chaque adsorbeur, un cycle comprenant les phases opératoires suivantes, le cycle étant décalé d'un adsorbeur à l'autre d'une durée T/3, où T désigne la durée du cycle ;

(a) une phase d'adsorption sensiblement isobare à une pression haute du cycle, comportant l'admission du mélange dans l'adsorbeur par une première extrémité, dite extrémité d'entrée, de l'adsorbeur, avec circulation du mélange dans l'adsorbeur et soutirage simultané à l'autre extrémité, dite extrémité de sortie, de l'adsorbeur d'une fraction enrichie en l'un des constituants dont une partie forme un gaz de production, le sens de circulation dans l'adsorbeur au cours de cette phase d'adsorption étant appelé co-courant ;

(b) une phase de désorption comportant une décompression à contre-courant jusqu'à une pression basse du cycle et comprenant une étape initiale au cours de laquelle du gaz est soutiré à co-courant simultanément à la décompression à contre-courant et est transféré dans un autre adsorbeur en début de phase de remontée en pression décrite ci-dessous ; et

(c) une phase de remontée en pression jusqu'au retour à la pression haute, comprenant une étape initiale au cours de laquelle l'adsorbeur reçoit à centre-courant du gaz provenant d'un autre adsorbeur en étape initiale de désorption, et une étape finale de recompression, jusqu'à la pression haute du cycle, par du gaz de production introduit à contre-courant.

Un procédé de ce type est décrit dans les documents FR-A-2.579.484 et EP-A-0.248.922.

L'invention s'applique en particulier à la production d'air enrichi en oxygène jusqu'à une teneur en oxygène d'environ 95 %, notamment comprise entre 90 et 95 % environ, à partir d'air atmosphérique ou, plus généralement, d'un mélange gazeux essentiellement constitué d'oxygène, d'azote et d'argon.

L'invention a pour but de fournir un procédé permettant d'obtenir une teneur aussi élevée en oxygène avec un rendement d'extraction en oxygène amélioré et, pour un cycle mixte, une utilisation optimale de la pompe à vide et de la soufflante.

A cet effet, l'invention a pour objet un procédé du type précité, caractérisé en ce que la phase de remontée en pression comporte, entre l'étape initiale et l'étape finale, une étape intermédiaire pendant laquelle l'adsorbeur reçoit à co-courant du gaz provenant dudit autre adsorbeur en étape initiale de désorption.

Dans la description qui va suivre, on entend par "équilibrage" une opération consistant à relier mutuellement deux adsorbeurs ayant des pressions différentes, en vue de réduire la différence de pressions entre eux ; cette opération peut être soit poursuivie jusqu'à égalisation des pressions, soit interrompue avant d'obtenir cette égalisation.

Avantageusement, la phase de désorption (b) comprend une étape finale d'élution (b3) à la pression basse du cycle au cours de laquelle du gaz prélevé à l'extrémité de sortie d'un adsorbeur en phase d'adsorption (a) est introduit à contre-courant dans l'adsorbeur simultanément au soutirage de gaz à contre-courant de cet adsorbeur.

Un exemple de mise en oeuvre de l'invention va maintenant être décrit en regard des dessins annexés, sur lesquels :

- la figure 1 est un schéma d'une installation destinée à la mise en oeuvre d'un procédé conforme à l'invention ; et
- la figure 2 est un diagramme illustrant le fonctionnement de cette installation.

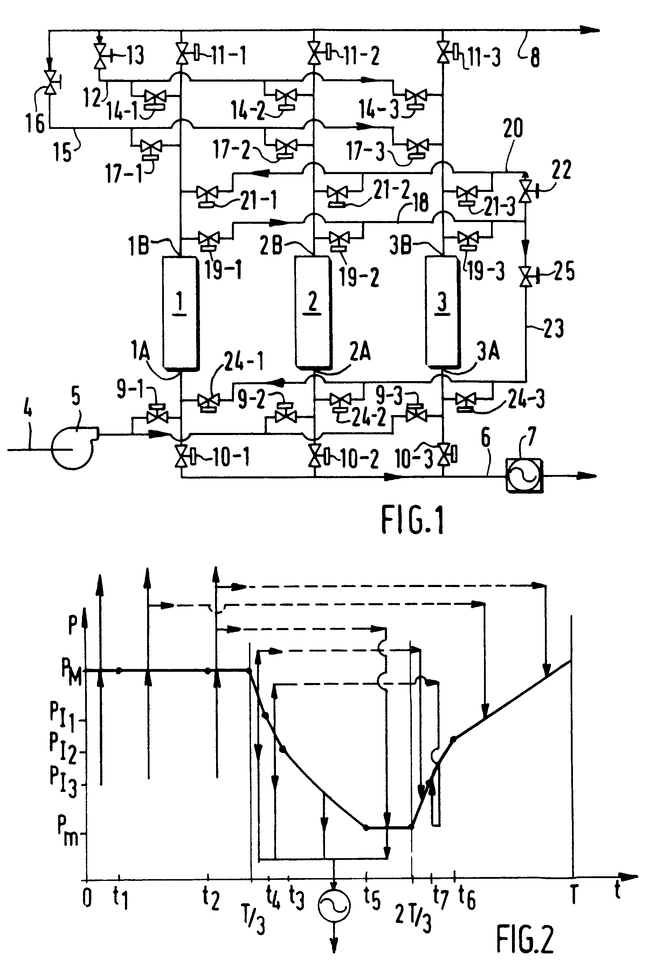

L'installation représentée à la figure 1 est destinée à produire de l'air enrichi en oxygène à une teneur de préférence comprise entre 90 et 95 % environ, à partir d'air atmosphérique non épuré. Elle comprend trois adsorbeurs 1 à 3, une ligne d'admission 4 équipée d'un ventilateur ou d'une soufflante 5, une ligne de pompage 6 équipée d'une pompe à vide 7, et une ligne 8 de production d'air enrichi. Chaque adsorbeur a une configuration cylindrique et comporte une entrée inférieure 1A à 3A et une sortie supérieure 1B à 3B. Les adsorbeurs sont emplis d'un adsorbeur qui adsorbe préférentiellement l'azote par rapport à l'oxygène et à l'argon, notamment d'un tamis moléculaire de type 5A ou 13X. Eventuellement, chaque adsorbeur peut comporter à sa base une couche d'un autre adsorbant ayant une action de dessiccation, notamment d'alumine ou de gel de silice.

La ligne 4 est reliée à l'entrée de chaque adsorbeur par l'intermédiaire d'une vanne respective 9-1 à 9-3. De même, la ligne 6 est reliée à l'entrée de chaque adsorbeur par l'intermédiaire d'une vanne respective 10-1 à 10-3. La ligne 8 est reliée à la sortie de chaque adsorbeur par l'intermédiaire d'une vanne respective 11-1 à 11-3.

Une première ligne 12 de prélèvement d'air enrichi en oxygène, équipée d'un organe 13 de contrôle de débit, relie la ligne 8 à la sortie de chaque adsorbeur par l'intermédiaire d'une vanne respective 14-1 à 14-3. De même, une seconde ligne 15 de prélèvement d'air enrichi en oxygène, équipée d'un organe 16 de contrôle de débit, relie la ligne 8 à la sortie de chaque adsorbeur par l'intermédiaire d'une vanne respective 17-1 à 17-3.

Par ailleurs, une ligne de décompression 18 peut être reliée à chaque sortie d'adsorbeur par l'intermédiaire d'une vanne respective 19-1 à 19-3 ; une ligne de recompression à contre-courant 20 peut être reliée à chaque sortie d'adsorbeur par l'intermédiaire d'une vanne respective 21-1 à 21-3 et est équipée d'un organe de réglage de débit 22 ; et une ligne de recompression à co-courant 23 peut être reliée à chaque entrée d'adsorbeur par l'intermédiaire d'une vanne respective 24-1 à 24-3 et est équipée d'un organe de réglage de débit 25.

Au moyen de cette installation, on réalise pour chaque adsorbeur un cycle que l'on a illustré à la figure 2 en référence à l'adsorbeur 1. Si T désigne la durée du cycle, le fonctionnement de l'adsorbeur 2 s'en déduit par décalage dans le temps de T/3 et celui de l'adsorbeur 3 par décalage dans le temps de 2T/3. Dans l'exemple illustré, on peut choisir par exemple une durée de cycle de 1 minute à quelques minutes.

Sur la figure 2, où les temps $t$ sont portés en abscisses et les pressions absolues P en ordonnées, les traits orientés par des flèches indiquent les mouvements et destinations des courants gazeux ; lorsque les flèches sont parallèles à l'axe des ordonnées, elles indiquent, en outre, le sens de circulation dans un adsorbeur : lorsqu'une flèche est dans le sens des ordonnées croissantes (vers le haut du diagramme), le sens du courant dans l'adsorbeur est à co-courant ; si la flèche dirigée vers le haut est située au-dessous du trait indiquant la pression dans l'adsorbeur, le courant pénètre dans l'adsorbeur par l'extrémité d'entrée de l'adsorbeur ; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter par l'adsorbeur considéré et du gaz soutiré de ce même adsorbeur en phase d'adsorption ; lorsqu'une flèche est dans le sens des ordonnées décroissantes (vers le bas du diagramme), le sens du courant dans l'adsorbeur est à contre-courant. Si la flèche dirigée vers le bas est située au-dessous du trait indiquant la pression de l'adsorbeur, le courant sort de l'adsorbeur par l'extrémité d'entrée de l'adsorbeur ; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase d'adsorption. D'autre part, on a indiqué en traits pleins les courants gazeux qui concernent exclusivement un adsorbeur et en traits pointillés les courants gazeux en provenance ou en direction d'autres adsorbeurs.

Le cycle complet sera maintenant décrit pour un adsorbeur, par exemple l'adsorbeur 1, en référence aux figures 1 et 2. Dans l'exemple de la figure 2, le cycle évolue entre deux pressions extrêmes, à savoir une pression maximale PM comprise entre la pression atmosphérique et 1,2 bar absolu, et une pression minimale Pm comprise entre 1 00 et 400 mb, ce qui explique l'utilisation de la soufflante 5 et de la pompe à vide 7.

Le cycle de la figure 2 comporte :

(a) de t = 0 à T/3, une phase d'adsorption isobare à la pression PM au cours de laquelle l'air atmosphérique à traiter est admis à l'entrée de l'adsorbeur et circule à co-courant dans celui-ci, tandis que du gaz (air enrichi en oxygène) est soutiré en sortie de l'adsorbeur. Cette phase se divise en trois étapes :

(a1) de t = 0 à t1 la totalité du gaz soutiré constitue du gaz de production, c'est-à-dire de l'air enrichi à 95 % d'oxygène (que l'on pourra désigner dans la suite par le simple mot "oxygène") ;

(a2) de t1 à t2, une partie du gaz soutiré constitue du gaz de production, et le reste est transféré à la sortie d'un autre adsorbeur en début de troisième étape de recompression (c2) décrite plus loin ;

(a3) de t2 à T/3, une partie du gaz soutiré constitue du gaz de production, une autre partie de ce gaz est transférée à la sortie d'un autre adsorbeur en fin de troisième étape de recompression (c2) décrite plus loin, et le reste de ce gaz est transféré à la sortie du troisième adsorbeur en phase d'élution (b3) décrite plus loin.

(b) de T/3 à 2T/3, une phase de désorption au cours de laquelle du gaz est soutiré à contre-courant par la pompe à vide 7 et qui est divisée en trois étapes :

(b1) de T/3 à t3, du gaz est soutiré en sortie de l'adsorbeur, simultanément au pompage à contre-courant ; cette étape se subdivise elle-même en deux sous-étapes :

(b11) de T/3 à t4 < t3, le gaz soutiré en sortie de l'adsorbeur est transféré à la sortie d'un autre adsorbeur en première sous-étape de recompression par équilibrage de pressions (c11) décrite plus loin ; cette sous-étape se termine lorsque la pression a atteint une première valeur intermédiaire PI1 ;

(b12) de t4 à t3, le gaz soutiré en sortie de l'adsorbeur est transféré à l'entrée du même autre adsorbeur en seconde sous-étape de recompression par équilibrage de pressions (c12) décrite plus loin ; cette sous-étape se termine à une seconde pression intermédiaire PI2 < PI1 ;

(b2) de t3 à t5, on effectue uniquement la poursuite du pompage à contre-courant, jusqu'à la pression basse Pm du cycle ;

(b3) cette étape, optionnelle, consiste en une élution à la pression basse Pm par du gaz provenant d'un autre adsorbeur en troisième étape d'adsorption (a3) ; ce gaz est introduit à contre-courant, et du gaz est soutiré par l'entrée de l'adsorbeur, pour réaliser une purge à une pression voisine de Pm ;

(c) de 2T/3 à T, une phase de remontée en pression divisée en deux étapes :

(c1) de 2T/3 à t6, une étape de recompression partielle par équilibrage de pressions, au cours de laquelle l'adsorbeur reçoit du gaz provenant de la sortie d'un autre adsorbeur en première étape de recompression (b1). Cette étape est elle-même subdivisée en deux sous-étapes :

(c11) de 2T/3 à t7 < t6, le gaz de recompression, très riche en oxygène, est introduit à contre-courant, l'entrée de l'adsorbeur étant fermée ; cette sous-étape se termine lorsque la pression est remontée à une troisième valeur intermédiaire PI3 < PI2 ; et

(c12) de t7 à t6, le gaz de recompression, moins riche en oxygène, est introduit à co-courant, la sortie de l'adsorbeur étant fermée, jusqu'à ce que la pression soit remontée à la valeur PI2.

(c2) de t6 à T, l'adsorbeur subit une recompression finale à contre-courant au moyen de gaz prélevé à la sortie d'un autre adsorbeur en étape d'adsorption (a2) puis (a3).

En variante, le cycle peut être transposé dans d'autres domaines de pressions, par exemple entre une pression haute de 3 à 5 bars absolus et une pression basse voisine de la pression atmosphérique.

Le cycle ainsi décrit apporte des avantages importants :

- le rendement d'extraction d'oxygène, défini comme le rapport de la quantité d'oxygène produite à celle contenue dans l'air entrant, est élevé, grâce au recyclage intégral des deux fractions successives enrichies en oxygène, soutirées en décompression à co-courant après la phase d'adsorption, pendant l'étape (b1) ;

- la qualité de la production d'oxygène est maintenue à un niveau élevé (jusqu'à 95 %) grâce à la réadmission dans des sens de circulation différents des fractions recyclées au cours des deux recompressions partielles (c11) et (c12) la première fraction, constituée d'un gaz très enrichi en oxygène, étant introduite par l'extrémité de sortie qui est celle de production d'oxygène de l'adsorbeur, et la seconde fraction, moins riche en oxygène que la précédente, comprenant tout ou partie du front d'adsorption d'azote, étant introduite par l'extrémité d'entrée qui est celle d'admission d'air de l'adsorbeur ;

- la consommation d'énergie de l'installation est optimisée grâce au maintien d'une extraction à contre-courant du gaz résiduaire sur chaque adsorbeur pendant une durée égale à 1/3 du temps du cycle, ce qui, dans le cas d'un fonctionnement avec régénération en dépression, assure une utilisation continue de la pompe à vide en service actif d'extraction de gaz sur les adsorbeurs.

On note également que le cycle maintient un débit d'admission d'air pendant 1/3 du temps de cycle sur chaque adsorbeur, ce qui entraine une admission continue d'air à traiter sur l'installation et une optimisation de la machine correspondante (soufflante ou compresseur).

En variante, pour réguler les débits d'air enrichi utilisés comme production et recyclés en étapes (b3) et (c2) on peut faire appel à un réservoir de stockage de l'air enrichi sortant des adsorbeurs en phase (a).

## Revendications

1. Procédé de traitement d'un mélange gazeux par adsorption à variation de pression (PSA), du type mettant on oeuvre trois adsorbeurs (1 à 3) avec, pour chaque adsorbeur, un cycle comprenant les phases opératoires suivantes, le cycle étant décalé d'un adsorbeur à l'autre d'une durée T/3, où T désigna la durée du cycle ;

(a) une phase d'adsorption sensiblement isobare à une pression haute du cycle (PM), comportant l'admission du mélange dans l'adsorbeur par une première extrémité (1A à 3A), dite extrémité d'entrée, de l'adsorbeur, avec circulation du mélange dans l'adsorbeur et soutirage simultané à l'autre extrémité (1B à 3B), dite extrémité de sortie, de l'adsorbeur d'une fraction enrichie en l'un des constituants dont une partie forme un gaz de production, le sens de circulation dans l'adsorbeur au cours de cette phase d'adsorption étant appelé co-courant ;

(b) une phase de désorption comportant une décompression à contre-courant jusqu'à une pression basse du cycle (Pm) et comprenant une étape initiale (b1) au cours de laquelle du gaz est soutiré à co-courant simultanément à la décompression à contre-courant et est transféré dans un autre adsorbeur en début de phase de remontée on pression (c) décrite ci-dessous ; et

(c) une phase de remontée en pression jusqu'au retour à la pression haute, comprenant une étape initiale (c11) au cours de laquelle l'adsorbeur reçoit à contre-courant du gaz provenant d'un autre adsorbeur en étape initiale de désorption (b1), et une étape finale (c2) de recompression, jusqu'à la pression haute du cycle (PM), par du gaz de production introduit à contre-courant,

caractérisé en ce que la phase de remontée en pression comporte, entre l'étape initiale (c11) et l'étape finale (C2), une étape intermédiaire (c12) pendant laquelle l'adsorbeur reçoit à co-courant du gaz provenant dudit autre adsorbeur en étape initiale de désorption (b1).

2. Procédé selon la revendication 1, caractérisé en ce que la pression (P12) de l'adsorbeur en fin de l'étape initiale (c1) de la phase de remontée en pression est égale à la pression de l'adsorbeur fournissant le gaz de recompression en fin l'étape initiale (b1) de sa phase de désorption.

3. Procédé selon la revendication 1 ou la revendication 2, caractérisé en ce que la phase de désorption (b) comprend une étape finale d'élution (b3) à la pression basse du cycle au cours de laquelle du gaz prélevé à l'extrémité de sortie d'un adsorbeur en phase d'adsorption (a) est introduit à contre-courant dans l'adsorbeur simultanément au soutirage de gaz à contre-courant de cet adsorbeur.

4. Procédé selon la revendication 3, caractérisé en ce que la durée de phase de désorption (b) est égale à T/3.

5. Procédé selon l'une des revendications 1 à 4, caractérisé en ce que, pendant l'étape finale (c2) de recompression, l'adsorbeur est recomprimé à contre-courant par du gaz prélevé à l'extrémité de sortie d'un adsorbeur en phase d'adsorption (a).

6. Procédé selon l'une des revendications 1 à 5, caractérisé en ce que la pression basse (absolue) du cycle (PM) est inférieure à la pression atmosphérique.

7. Procédé selon la revendication 6, caractérisé en ce que la pression (absolue) du cycle (PM) est comprise entre $1 \times 10^5$ Pa et $1,2 \times 10^5$ Pa et la pression basse (absolue) du cycle n'excède pas $0,4 \times 10^5$ Pa.

8. Procédé selon la revendication 4 et l'une des revendications 6 ou 7, caractérisé en ce que la décompression à contre-courant est effectuée par une pompe à vide (7) pendant toute la durée (T/3) de la phase de désorption (b).

9. Procédé selon l'une des revendications 1 à 8, caractérisé en ce que le mélange gazeux est essentiellement constitué d'azote, d'oxygène et d'argon, et ladite fraction enrichie contient 90 à 95 % d'oxygène environ.

**Claims**

1. Process for the treatment of a gaseous mixture by adsorption with pressure variation (PSA), of the type employing three adsorbers (1 to 3) with, for each adsorber, a cycle comprising the following operating phases, the cycle being out of phase with another one by a period of T/3, where T denotes the duration of the cycle;

(a) an essentially isobaric adsorption phase at a high pressure of the cycle (PM), in which the mixture is introduced to the adsorber at a first end (1A to 3A) of the adsorber, referred to as the inlet end, the mixture circulates within the adsorber and simultaneously at the other end (1B to 3B)of the adsorber, called the outlet end, an enriched fraction of one of the constituents, one part of which forms a production gas, is removed, the direction of circulation within the adsorber during this adsorption phase being referred to as concurrent;

(b) a desorption phase comprising counter-current decompression to a low pressure of the cycle (Pm) and comprising an initial stage (b1) during which gas is removed in a concurrent manner, simultaneously to the counter-current decompression and is transferred to another adsorber at the start of the pressure increase phase (c) described below; and

(c) a pressure increase phase back to the high pressure, comprising an initial stage (c11) during which the adsorber receives gas in a counter-current supplied by another adsorber in the initial desorption stage (b1), and a final decompression stage (c2), to the high pressure of the cycle (PM), by production gas introduced in a counter-current,

characterized in that the pressure increase phase includes, between the initial stage (c11) and the final stage (C2), an intermediate stage (c12) during which the adsorber receives gas in a counter-current supplied from the said other adsorber in the initial desorption stage (b1).

**2.** Process according to claim 1, characterized in that the pressure (P12) of the adsorber at the end of the initial stage (c1) of the pressure increase phase is equal to the pressure of the adsorber supplying recompression gas at the end of the initial stage (b1) of its desorption phase.

**3.** Process according to claim 1 or claim 2, characterized in that the desorption phase (b) comprises a final elution stage (b3) at the low pressure of the cycle during which the gas withdrawn at the outlet end of the adsorber in the adsorption phase (a) is introduced in a counter-current into the adsorber as gas is withdrawn simultaneously in a counter-current from this adsorber.

**4.** Process according to claim 3, characterized in that the duration of the desorption phase (b) is equal to T/3.

**5.** Process according to one of claims 1 to 4, characterized in that, during the final recompression stage (c2) the adsorber is recompressed in counter-current by the gas withdrawn at the outlet end of an adsorber in the adsorption phase (a).

**6.** Process according to one of claims 1 to 5, characterized in that the low pressure (absolute) of the cycle (PM) is less than atmospheric pressure.

**7.** Process according to claim 6, characterized in that the pressure (absolute) of the cycle (PM) lies between $1 \times 10^5$ Pa and $1.2 \times 10^5$ Pa and the low pressure (absolute) of the cycle does not exceed $0.4 \times 10^5$ Pa.

**8.** Process according to claim 4 and either of claims 6 or 7, characterized in that countercurrant decompression is carried out by means of a vacuum pump (7) during all the duration (T/3) of the desorption phase (b).

**9.** Process according to one of claims 1 to 8, characterized in that the gaseous mixture consists essentially of nitrogen, oxygen and argon, and the said enriched fraction contains about 90 to 95% of oxygen.

**Patentansprüche**

**1.** Verfahren zur Behandlung eines Gasgemischs durch Adsorption unter Druckänderung (PSA), bei dem drei Adsorber (1 bis 3) mit jeweils einem Zyklus verwendet werden, der die folgenden Betriebsphasen umfaßt, wobei der Zyklus von Adsorber zu Adsorber ausgehend von einer Zyklusdauer T um die Dauer T/3 versetzt ist:

(a) eine näherungsweise isobare Adsorptionsphase bei einem hohen Zyklusdruck (PM), umfassend den Eintritt des Gemischs in den Adsorber an einer ersten, als Eingangsseite bezeichneten Seite (1A bis 3A) des Adsorbers, die Zirkulation des Gemischs in dem Adsorber sowie die gleichzeitige Entnahme eines mit einem der Bestandteile angereicherten Anteils, von dem ein Teil ein Produktionsgas bildet, an der anderen, als Ausgangsseite bezeichneten Seite (1B bis 3B) des Adsorbers, wobei die Zirkulationsrichtung im Adsorber während dieser Adsorptionsphase als Mitstrom bezeichnet wird;

(b) eine Desorptionsphase, umfassend eine im Gegenstrom stattfindende Druckverminderung auf einen niedrigen Zyklusdruck (PM) sowie eine Anfangsstufe (b1), während der Gas gleichzeitig mit der im Gegenstrom stattfindenden Druckverminderung in Gegenstromrichtung entnommen und zu Beginn der nachstehend unter (c) beschriebenen Phase des Druck-Wiederanstiegs in einen anderen Adsorber überführt wird; und

(c) eine Phase der erneuten Druckerhöhung bis auf den hohen Druck, umfassend eine Anfangsstufe (c11), während derer dem Adsorber in Gegenstromrichtung von einem anderen, sich in der Anfangsstufe der Desorption (b1) befindenden Adsorber stammendes Gas zugeführt wird, sowie eine Endstufe (c2) zur Verdichtung auf den hohen Zyklusdruck (PM) durch ein in Gegenstromrichtung eingeleitetes Produktionsgas,

dadurch gekennzeichnet, daß die Phase der erneuten Druckerhöhung zwischen der Anfangsstufe (c11) und der Endstufe (c2) eine Zwischenstufe (c12) umfaßt, während derer dem Adsorber in Gegenstromrichtung ein von dem anderen, sich in der Desorptions-Anfangsstufe (b1) befindenden Adsorber stammendes Gas zugeführt wird.

**2.** Verfahren nach Anspruch 1, dadurch gekennzeichnet, daß der Druck (P12) des Adsorbers am Ende der Anfangsstufe (c1) der Phase der erneuten Druckerhöhung gleich dem Druck des Adsorbers ist, der am Ende der Anfangsstufe (b1) seiner Desorptionsphase das Gas zur Verdichtung zuführt.

**3.** Verfahren nach Anspruch 1 oder 2, dadurch gekennzeichnet, daß die Desorptionsphase (b) eine ElutionsEndstufe (b3) bei dem niedrigen Zyklusdruck umfaßt, während derer an der Ausgangsseite eines sich in der Adsorptionsphase (a) befindenden Adsorbers entnommenes Gas in Gegenstromrichtung in den Adsorber eingeleitet und gleichzeitig Gas in Gegenstromrichtung aus diesem Adsorber entnommen wird.

4. Verfahren nach Anspruch 3, dadurch gekennzeichnet, daß die Dauer der Desorptionsphase (b) T/3 beträgt.

5. Verfahren nach einem der Ansprüche 1 bis 4, dadurch gekennzeichnet, daß der Adsorber während der Endstufe (c2) der Verdichtung durch an der Ausgangsseite eines sich in der Adsorptionsphase (a) befindenden Adsorbers entnommenes Gas verdichtet wird.

6. Verfahren nach einem der Ansprüche 1 bis 5, dadurch gekennzeichnet, daß der niedrige (absolute) Zyklusdruck (PM) kleiner ist als der atmosphärische Druck.

7. Verfahren nach Anspruch 6, dadurch gekennzeichnet, daß der (absolute) Zyklusdruck (PM) zwischen $1 \times 10^5$ Pa und $1,2 \times 10^5$ Pa liegt, und daß der niedrige (absolute) Zyklusdruck $0,4 \times 10^5$ Pa nicht überschreitet.

8. Verfahren nach Anspruch 4 und einem der Ansprüche 6 oder 7, dadurch gekennzeichnet, daß die Druckverminderung in Gegenstromrichtung durch eine Vakuumpumpe (7) während der gesamten Dauer (T/3) der Desorptionsphase (b) erfolgt.

9. Verfahren nach einem der Ansprüche 1 bis 8, dadurch gekennzeichnet, daß das Gasgemisch im wesentlichen aus Stickstoff, Sauerstoff und Argon besteht, und daß der angereicherte Teil etwa 90 bis 95 % Sauerstoff enthält.

FIG.1

FIG.2